Europäisches Patentamt

European Patent Office

Office européen des brevets

(19)

(11) Publication number: **0 133 190**
A1

# EUROPEAN PATENT APPLICATION

(21) Application number: **83304447.2**

(22) Date of filing: **01.08.83**

(51) Int. Cl.⁴: **H 04 N 7/16**

(43) Date of publication of application: **20.02.85**
Bulletin **85/8**

(84) Designated Contracting States: **DE FR GB IT NL**

(71) Applicant: **Payview Limited, G.P.O. Box 3000, Hong Kong (HK)**

(72) Inventor: **Cheung, William Shiu Hung, Ground Floor 95B Robinson Road, Hong Kong (JP)**

(74) Representative: **Cline, Roger Ledlie et al, STANLEY, POPPLEWELL, POOLE 57 Lincoln's Inn Fields, London WC2A 3LS (GB)**

(54) **Encoding and decoding of a television signal.**

(57) A video signal is encoded in a pattern which changes from field to field. The encoding pattern starts at the Nth line where N is a random number generated afresh for each field, and thereafter alternate lines have their video portions noninverted and inverted. Further encoding may be achieved by shifting the horizontal synchronisation pulses of certain lines starting from the Nth line and this shifting is applied to bands of lines separated by bands of lines in which the synchronisation pulse is left unchanged, in a regular pattern.

In a transmission system, the encoded video signal is combined with the encoding data and an audio signal for modulation of an rf carrier. The decoding information may be applied to a sub-carrier.

# ENCODING AND DECODING INFORMATION

This invention relates to encoding a television signal, and it is also concerned with the transmission of such an encoded signal, and the reception and decoding of such a signal.

Coding of information is required when it is desired to restrict the reception of the information in intelligible form to certain recipients, for example the subscribers to a television service.

Encoding apparatus for television signals in which the information-bearing portions of some lines are inverted are shown in United States Patent Specifications Nos. 3,801,732; 3,919,462; 4,022,972 and 4,025,948. Our earlier British Patent Specifications Nos. 1,602,119; 2,042,849 and 2,042,846 describe earlier forms of encoding apparatus and it may be convenient to refer to those specifications to provide a background for the present description.

According to one aspect of the invention there is provided scrambling apparatus as set out in claim 1 of the claims of this specification.

According to another aspect of the invention there is provided a scrambling method as set out in claim 2 of the claims of this specification.

Examples of the invention will now be described with reference to the accompanying drawings, in which:-
Fig. 1 is a schematic diagram of an encoder;
Fig. 2 is a schematic diagram of an alternative encoder;
Fig. 3 is a flow diagram of the encoder microprocessor;
Fig. 4 is a schematic diagram of a decoder;

Fig. 5 is a schematic diagram of an alternative decoder;

Fig. 6 is a circuit of an encoder;

Fig. 7 is a circuit of a decoder;

Fig. 8 is a flow diagram of the decoder microprocessor; and

Figs. 9 and 10 show waveforms present in the apparatus.

The composite video signal of a television picture contains for each field an initial series of synchronising pulses, followed by, for each line, a horizontal sync pulse, a colour burst and the video information signal of that line. The composite signal to be encoded is shaped in a processing amplifier 21 which extracts the zero time pulses, the vertical synchronisation pulses and the horizontal synchronisation pulses, all of which are fed to the encoder microprocessor 22, which is also responsive to a computer 24 providing subscriber information. The composite video signal from the amplifier 21 is passed to a video encoder 23 controlled by video encoding data from the microprocessor 22. The encoding of the video portion of the composite signal will be described later.

The composite signal from the encoder 23 passes through a line selector 25 to a data inserter 26 which is also under the control of the microprocessor 22. The line selector 25 selects a few lines from the beginning of each field during the vertical blanking period in which the data information is inserted from the microprocessor 22 by the data inserter 26. These data signals represent encoding information (to enable a decoder to reconstitute the original and subscriber address information from the computer 24 to control the use of the decoded information by the subscriber).

The encoded and modified signal is now applied to an I.F. modulator 27 and then to a circuit 28 in which the horizontal synchronisation pulses are selectively shifted in level to provide further encoding of the composite signal, under control of encoding data from the microprocessor 22.

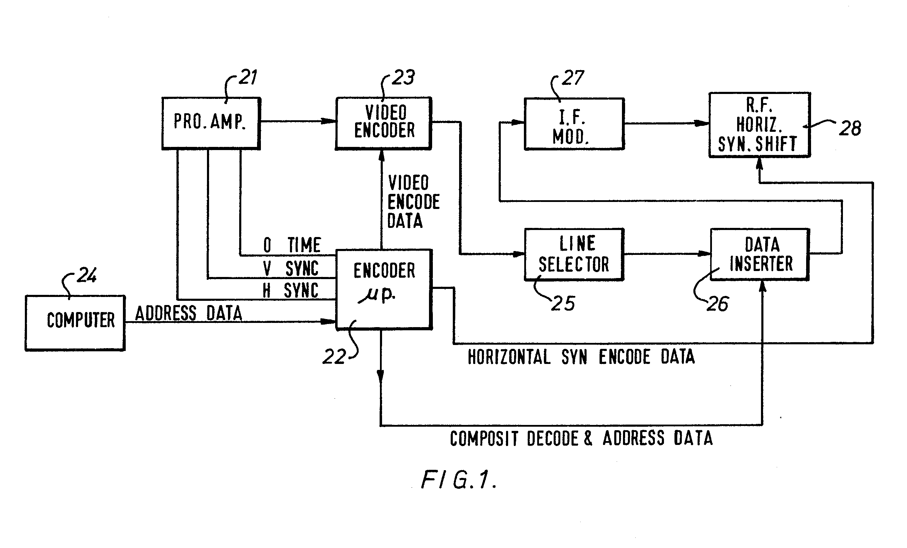

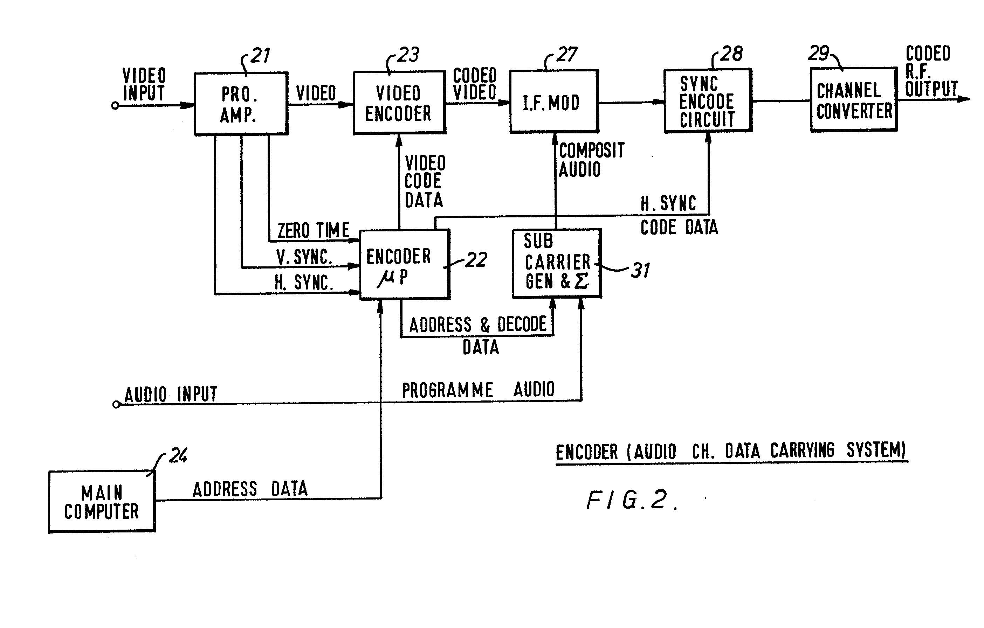

Fig. 2 shows a different encoding arrangement. In this case the decoding and address data from the microprocessor 22 is applied to a sub carrier generator and adder 31, which also receives the programme audio signal. The output of circuit 31 is applied to the I.F. modulator 27. The data signal is no longer restricted to a few lines of the vertical blanking period as it was by line selector 25 in Fig. 1, but it now uses the main audio channel for transmission of composite data while the programme audio signal has to use the sub-carrier which may limit its quality.

In our earlier patent specifications, encoding has used a random number generated afresh for each field to control the size of the encoding pattern. For example in British Patent Specification No. 2,042,846, the field is divided into bands of N lines each, where N is the random number for that field, alternate bands having the video component of each line inverted.

In the present apparatus the random number N is used to control the start of the encoding during a field, whereas the encoding pattern from that start is fixed and regular. This is a simpler system, requiring less complicated apparatus at both transmitter and receiver. The encoding pattern can of course be changed by changing a ROM or software in the microprocessors at both transmitter and all the receivers.

The illustrated apparatus encodes the video signal in two ways, by inverting the video component (not the initial synchronising pulse and colour burst) of certain lines, and by varying the level of the horizontal synchronising pulse of certain lines. The initial period of each field is left unencoded, coding starting with the Nth line where N is the random number generated afresh for each field. The video inversion takes place for alternate lines, i.e. the Nth, (N + 2)th, (N + 4)th, etc. The sync pulse shifting takes place for bands of lines, separated by bands in which the pulse is at the usual level (e.g. N to N + 29 shifted, N + 30 to N + 31 normal, N + 32 to N + 61 shifted, etc.). This alternation of sync pulse level can confuse the TV set AGC system, whereas the receiver might be able to present a fairly intelligible picture from a field in which all the horizontal sync pulses are shifted.

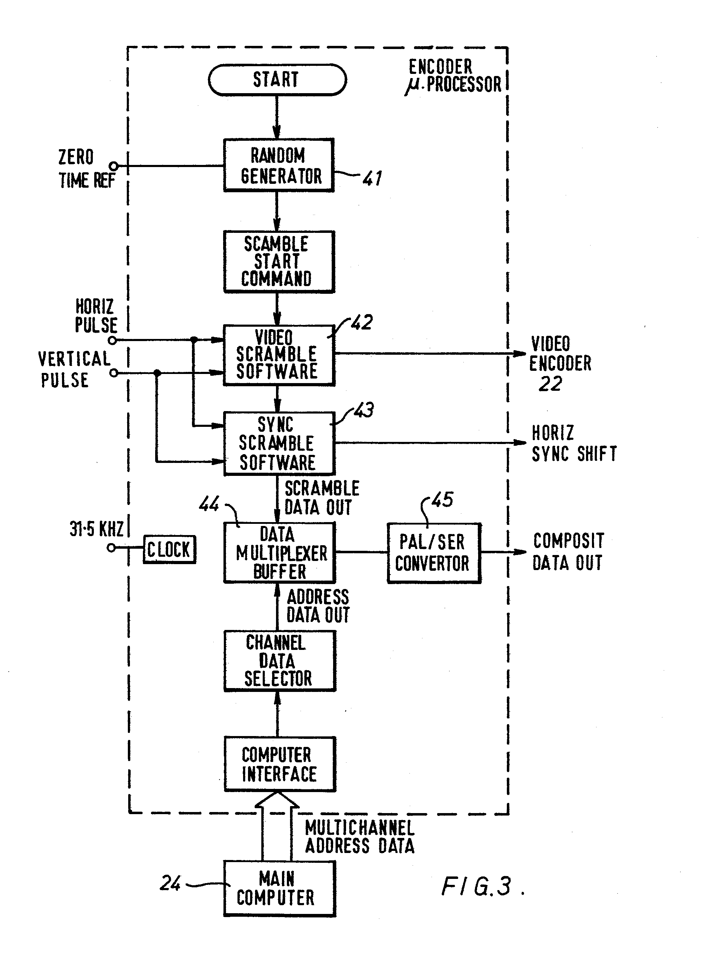

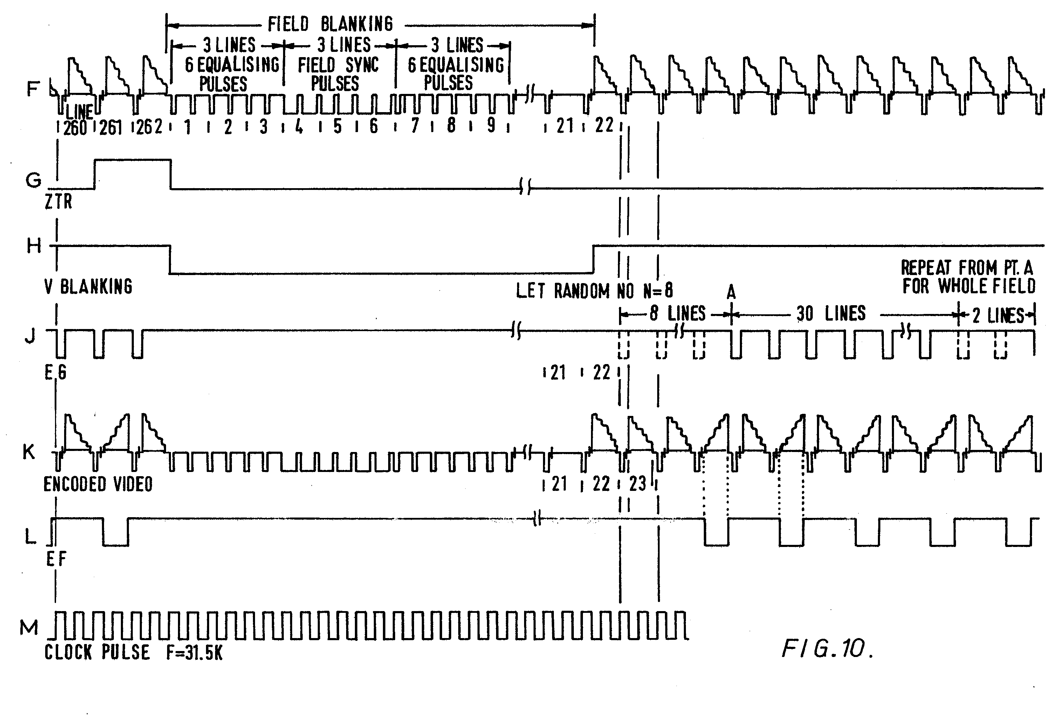

A flow chart for the microprocessor 22 is shown in Fig. 3. The zerotime reference (see waveform G of Fig. 10) is fed into the random number generator 41 to cause the generation of a new random number N which causes the encoding to start at the Nth line of that field. The horizontal and vertical pulses are applied to the video scrambling software 42 to cause inversion of the video portions of alternate lines when the encoding starts. The same pulses are applied to the sync scrambling software 43 to cause alternating groups of lines to have the horizontal sync pulses shifted. There are 30 lines with shifted pulses and 2 with normal pulses in the present example.

The scramble data may identify all the lines whose video portions are inverted and/or whose sync pulses are shifted, or it may just identify the random number, a ROM in the encoder microprocessor and in each of the decoder microprocessors providing the remaining data which do not change from one field to another. The scramble data is mixed with subscriber address data from computer 24 in buffer, converted from parallel to serial at 45 for transmission and applied to the data inserter 26 of Fig. 1 or the sub carrier generator 31 of Fig. 2.

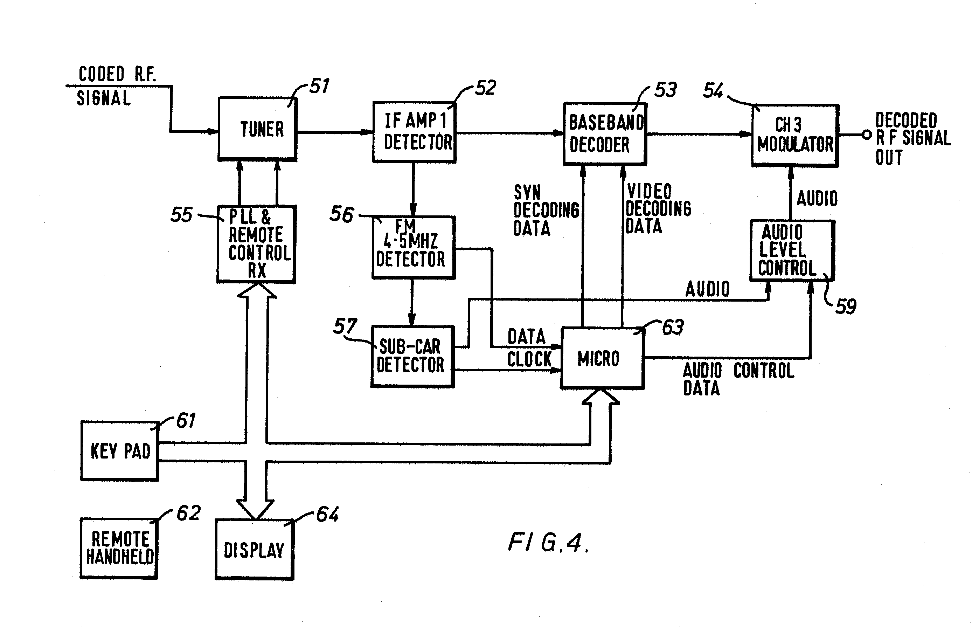

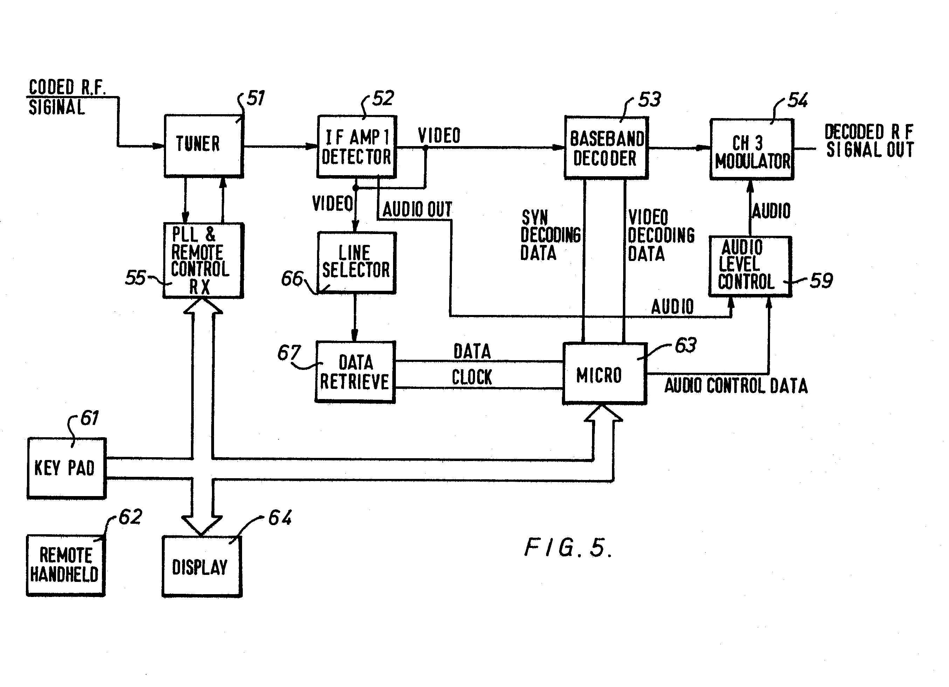

At the subscriber's apparatus, there is a decoder as illustrated in Figs. 4 or 5 corresponding to the encoders of Figs. 1 and 2 respectively. The coded R.F. signal received is applied to a tuner 51 which is tuned by a phase locked loop 55 which may be switched by an integral or remote key-pad 61 or 62 and also by receiver microprocessor 63: a display 64 indicates the selected channel. An I.F. amplifier and detector 52 receives the tuner output and in the apparatus of Fig. 4 separates the video and audio signals. The audio signals are controlled in level through the microprocessor by means of the key-pad 61 and control circuit 59 and applied to a modulator 54. The video signals are applied to a line selector 56 to select the lines reserved for data transmission and from the reserved lines the data and clock signals received by 57 are applied to the receiver microprocessor. The microprocessor 63 will extract the data relating to that subscriber and compare it with a reference stored in a ROM and will only enable the remainder of the apparatus if the subscriber is authorised to receive at that time. The microprocessor 63 controls the tuner 51 to switch to the channel which the subscriber has given prior notice to the transmitter of his wish to watch. The microprocessor 63 also applies the video and sync decoding data to a base band decoder 53 which acts on the video signals. The decoded video is mixed with the audio signals in the modulator 54 to produce the decoded R.F. signal output.

In the decoder of Fig. 5 the I.F. amplifier and detector 52 feeds the F.M. baseband detector 66 and the subcarrier detector 67 and the microprocessor 63 receives the extracted data from the F.M. detector 66 and the clock signal at sub carrier frequency (e.g. 31.5kHz) from the sub-carrier detector 67. The audio signal in this case is obtained from the subcarrier detector 67. In other respects the decoder of Fig. 5 resembles that of Fig. 4.

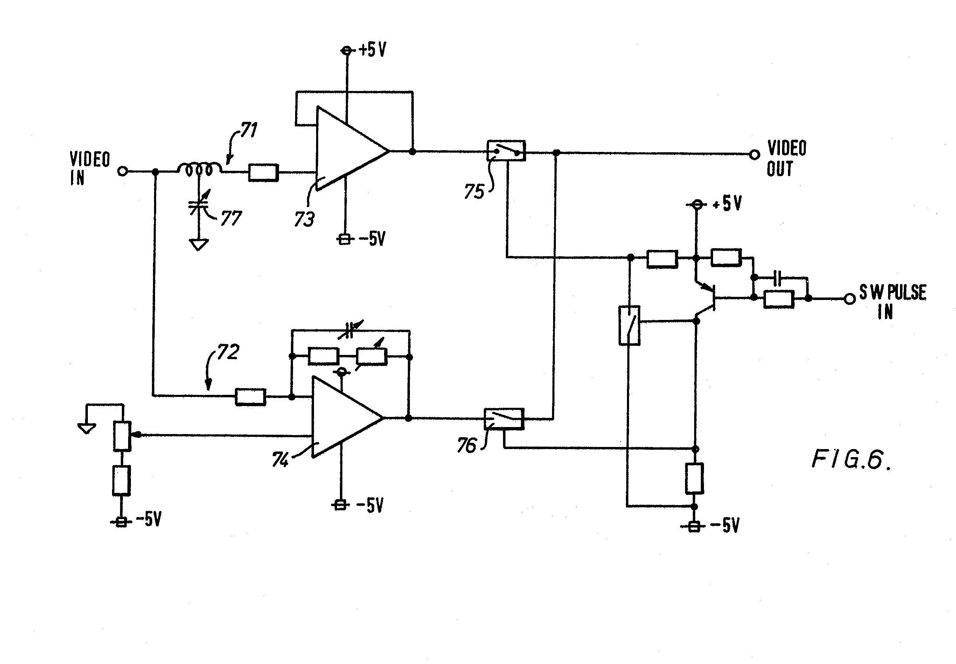

Fig. 6 illustrates the encoder for the present apparatus which is much simpler than those described in our earlier specifications. There is no phase splitter, but instead there are two channels 71, 72 to which the incoming video is applied, the two channels each containing an amplifier 73, 74 responsive only to positive and negative components respectively of the video input. There are gates 75, 76 in the respective channels, worked complementarily. One channel is pvovided with a variable delay 77 to compensate for inequalities.

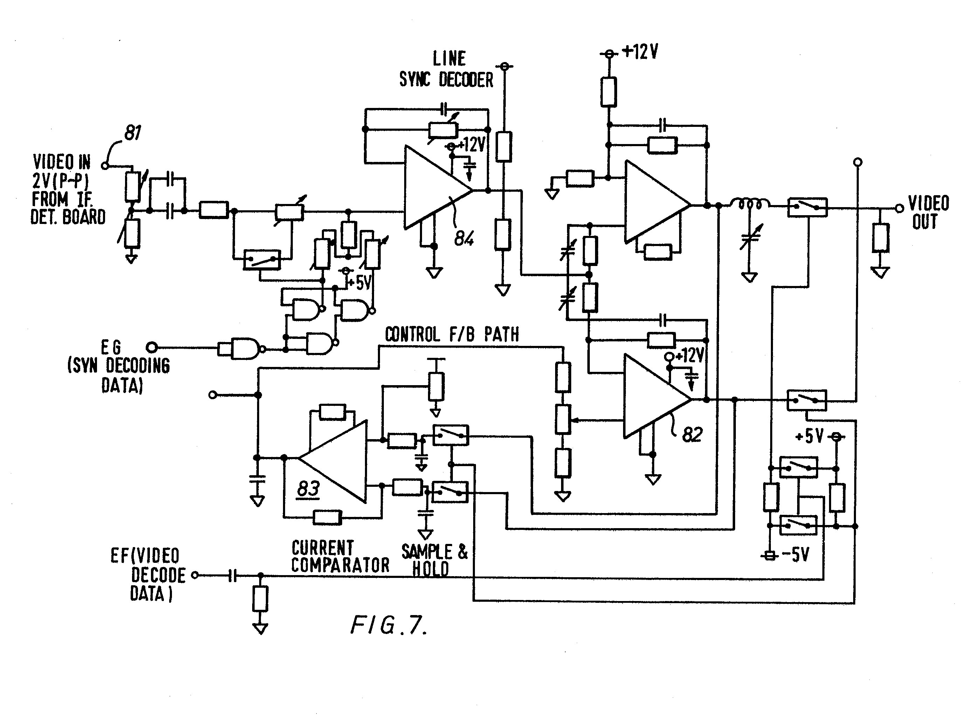

Fig. 7 illustrates the double decoding arrangement, for the video conversion and sync shifting. The incoming coded video has the horizontal synchronisation pulse amplified in accordance with the decoding data received at input 81 which data changes the overall gain of the first amplifier 84. The video inversion decoding is carried out with the two channel arrangement similar to the encoder of Fig. 6. The DC level and gain of the amplifier 82 in one of the channels are controlled from a sample + hold current comparator circuit 83 connected to both channels so as to equalise the d.c. level of the two decoded video signals.

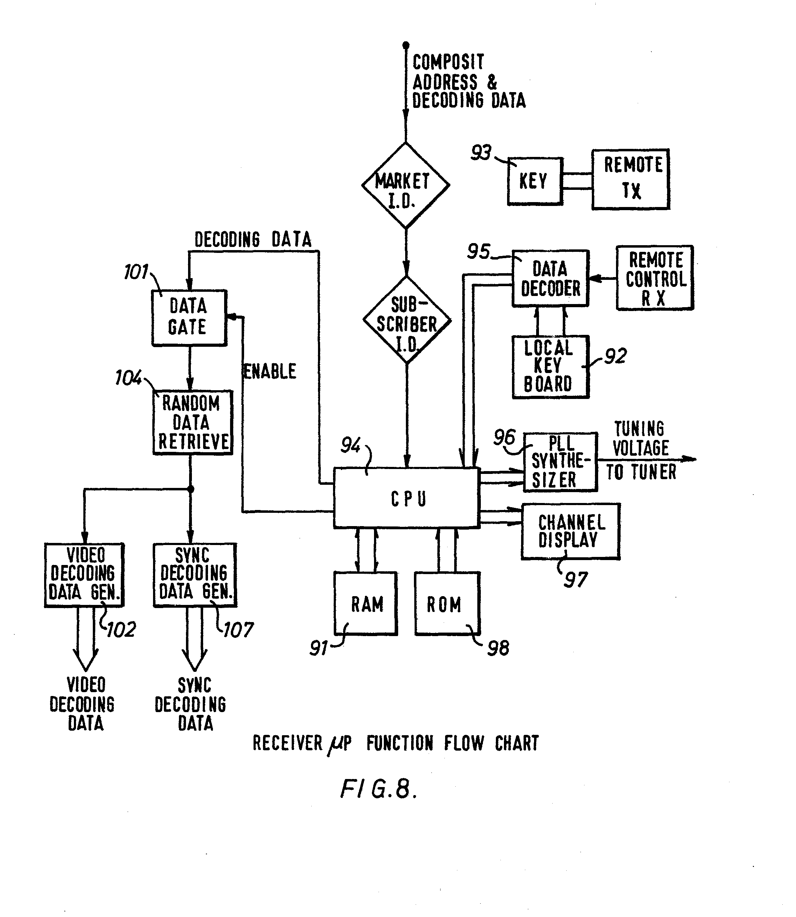

Fig. 8 illustrates the flow chart of the receiver microprocessor. A subscriber may operate his set to receive programmes which are available freely on his subscription or to receive programmes which require advance order (and special payment) to the transmitting company. In the latter case, the transmitting company will send a message to the subscriber's set which is stored in a RAM 91 of the microprocessor. For the freely available programmes, the subscriber keys in his requirements by a local or remote key band 92 or 93 to the CPU 94 via a data decoder 95. For the other programmes, the RAM 91 in conjunction with a clock energises the receiver at the appropriate time.   In each case the CPU operates the PLL synthesiser 96 (see Figs. 4 and 5) to select the desired channel and the channel display 97.   The incoming signal contains subscriber identity signals which are compared with those in the ROM 98 and the apparatus will be disabled if the subscriber is no longer entitled to receive programmes.   If the subscriber is acceptable, the data gate 101 is enabled and decoding data from the incoming signal is applied to the video decoder 102 and sync decoder 103 by the random data reference 104.

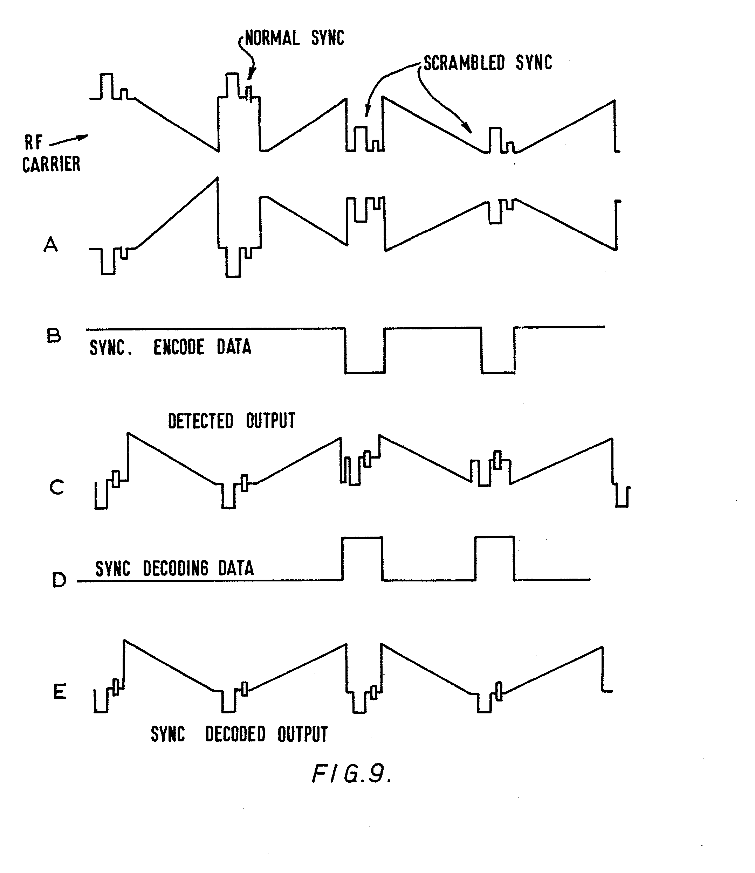

In Fig. 9, waveform A represents the coded video composite signal, modulated on an r.f. carrier.   The waveform represents four lines of a field, each line having a horizontal synchronisation pulse and a colour burst followed by the video portion of the line, represented by a falling saw-tooth.   It will be seen that the first and third lines in waveform A have the standard video portion and second and fourth lines have the video portion inverted (as the saw-tooth is rising).   The horizontal sync pulses of the first two lines are normal, extending to the full height of the envelope, but the pulses of the third and fourth lines are of very reduced amplitude, which would not be effective in synchronising a receiver without the proper decoder.

Waveform B shows the encoding data which is transmitted with the other data and the encoded signal.   Waveform C shows the detected output at the receiver and waveform D the decoding pulses generated from the received data.   The pulses are subtracted from the detected output to provide the decoded signal in which the synchronisation pulses again extend to the extreme d.c. level in order to synchronise the received picture.

Fig. 10 shows the encoder waveforms for the last four lines of one field, the pulses during the field blanking period and the first lines of the next field. Each line is represented diagrammatically by a falling saw-tooth video portion, with initial sync and colour burst signals.

Waveform G is the Zero Time Reference pulse at the end of one field, which is used to reset the random number generator and the parts of the microprocessor which is generating decoding data dependent on the random number generated for the field just ended. The ZTR pulse causes the generator to generate a new number, which here has been taken to be 8.

Waveform H is the vertical blanking signal which occurs during the sync pulses denoting the start of the next field.

Waveform J represents the sync shifting pulses for each line. The first 8 lines are not shifted, and shifting starts from the 9th pulse, for the next 30 pulses. Then follow 2 unshifted pulses, repeating the 30 and 2 pulse periods to the end of the field.

Waveform K shows the encoded video signal, the first 8 lines remaining uninverted, and then alternate lines are inverted.

Waveform L shows the video encoding data, transmitted with an inverted line. Waveform M is a clock signal, at twice line frequency.

The encoding signals of Waveforms J and L do not begin until the second line of the field, since the microprocessor cannot sense the start of a field until the first line has occurred and so it cannot be ready to generate encoding pulses until the second line.

In the transmission of video information, it is usual to allocate a frequency spectrum of about 6MHz to a channel. The video signal takes most of this range of frequencies and it is usual to transmit the audio signal by FM within the remaining frequencies. It is possible to take one frequency from the audio part of the spectrum and use it as a sub-carrier, frequency modulating that sub-carrier with additional information, such as the coding data from the encoder microprocessor. It is also possible to increase the data transmission capability at the cost of audio quality, by swapping the coding data and audio signal transmission arrangements, sending the audio signal as a frequency modulation of the sub-carrier and using the frequencies normally allotted to the audio signal for data transmission.

The present specification describes apparatus adapted for use with the United States television system. Adjustment of frequencies and other parameters will have to be made to comply with the standards of other countries.

CLAIMS:-

1. A apparatus for scrambling a video signal of the type representing a plurality of horizontal lines of a picture field for display on a television receiver comprising:

a random number generator means 22 for providing a starting signal during each field of said video signal, said starting signal being randomly selected for each field for identifying the beginning line of a scrambled portion of said field; and

means 23 for changing the luminance level and chrominance of the video signal representing a plurality of alternate lines of the lines occurring subsequent to said starting signal, whereby a video signal is produced having an unscrambled portion and a scrambled portion which randomly varies between fields, said scrambled portion comprising scrambled lines separated by unscrambled lines.

2. Apparatus as claimed in claim 1 further comprising means for shifting the level of the horizontal synchronisation pulses of the certain lines during each field.

3. Apparatus as claimed in claim 2 wherein said shifting means is arranged to shift the pulses of certain lines starting with or following said beginning line.

4. A method for scrambling a video signal comprising:

generating during each vertical interval a random number identifying a horizontal line of a subsequent field of said video signal;

counting subsequent horizontal lines following said identified line; and

inverting the video portion of alternate of said counted lines following said identified horizontal line, whereby a portion of said subsequent field contains
an unscrambled portion and a remaining scrambled
portion of alternate inverted lines.

5. A method as claimed in claim 4 further comprising
shifting the level of the horizontal synchronisation
pulses of certain lines in said subsequent field.

6. The method as claimed in claim 5 wherein said
certain lines begin with or follow said identified
line.

FIG.1.

ENCODER (AUDIO CH. DATA CARRYING SYSTEM)

FIG.2.

FIG.3.

FIG.4.

F I G. 5.

FIG.6.

FIG.7.

0133190

RECEIVER μP FUNCTION FLOW CHART

FIG.8.

0133190

FIG.9.

F I G. 10.

European Patent Office

**EUROPEAN SEARCH REPORT**

## DOCUMENTS CONSIDERED TO BE RELEVANT

EP 83 30 4447

| Category | Citation of document with indication, where appropriate, of relevant passages | Relevant to claim | CLASSIFICATION OF THE APPLICATION (Int. Cl. 3) |
|---|---|---|---|
| A | US-A-4 245 246 (CHEUNG) * Column 3, lines 32-36, 51-62; figure 3 * | 1 | H 04 N 7/16 |
| | --- | | |
| A,D | GB-A-2 042 846 (PAYVIEW) * Page 2, lines 95-98; page 3, lines 11-14; figure 3 * | 1 | |
| | --- | | |
| A | FR-A-2 443 778 (OAK) * Page 2, line 38 - page 3, line 3 * | 2 | |
| | ----- | | |

TECHNICAL FIELDS SEARCHED (Int. Cl. 3)

H 04 N 7/16

The present search report has been drawn up for all claims

| Place of search THE HAGUE | Date of completion of the search 16-03-1984 | Examiner YVONNET J.W. |
|---|---|---|

EPO Form 1503. 03 82

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document